(19) **Europäisches Patentamt / European Patent Office / Office européen des brevets**

(11) **EP 4 421 915 A1**

(12) **EUROPEAN PATENT APPLICATION**
published in accordance with Art. 153(4) EPC

(43) Date of publication:
28.08.2024 Bulletin 2024/35

(21) Application number: 23835727.1

(22) Date of filing: 26.06.2023

(51) International Patent Classification (IPC):
$H01M\ 4/525^{(2010.01)}$    $H01M\ 4/36^{(2006.01)}$
$H01M\ 4/505^{(2010.01)}$    $H01M\ 10/54^{(2006.01)}$
$H01M\ 4/02^{(2006.01)}$

(52) Cooperative Patent Classification (CPC):
H01M 4/02; H01M 4/36; H01M 4/505; H01M 4/525;
H01M 10/54

(86) International application number:
PCT/KR2023/008799

(87) International publication number:
WO 2024/010260 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.07.2022 KR 20220082982
06.07.2022 KR 20220082983
23.06.2023 KR 20230080987

(71) Applicant: LG Energy Solution, Ltd.
Seoul 07335 (KR)

(72) Inventors:
• SEO, Yongsik
  Daejeon 34122 (KR)
• YANG, Doo Kyung
  Daejeon 34122 (KR)
• KIM, Min Seo
  Daejeon 34122 (KR)
• CHOI, Jeong Mi
  Daejeon 34122 (KR)
• PARK, Se Ho
  Daejeon 34122 (KR)
• LEE, Jeongbae
  Daejeon 34122 (KR)
• SEONG, Eunkyu
  Daejeon 34122 (KR)
• KIM, Yeon Jun
  Daejeon 34122 (KR)
• YU, Hyemin
  Daejeon 34122 (KR)

(74) Representative: Hoffmann Eitle
Patent- und Rechtsanwälte PartmbB
Arabellastraße 30
81925 München (DE)

(54) **RECYCLED CATHODE ACTIVE MATERIAL, METHOD FOR RECYCLING CATHODE ACTIVE MATERIAL, AND SECONDARY BATTERY COMPRISING SAME**

(57) The present invention relates to a recycled positive electrode active material, a method of recycling a positive electrode active material, and a secondary battery including the recycled positive electrode active material. More particularly, the present invention relates to a recycled positive electrode active material including one or more selected from the group consisting of a lithium nickel oxide (LNO)-based positive electrode active material, a nickel-cobalt-manganese (NCM)-based positive electrode active material, a nickel-cobalt-aluminum (NCA)-based positive electrode active material, and a nickel-cobalt-manganese-aluminum (NCMA)-based positive electrode active material, including 60 mol% or more of Ni, and containing crystalline LiF, a method of recycling a positive electrode active material, and a secondary battery including the recycled positive electrode active material.

According to the present invention, the present invention has an effect of providing a positive electrode active material prepared by firing a waste positive electrode containing a high-nickel (Ni) positive electrode material at a predetermined temperature, adding a lithium precursor immediately after the firing without a washing process, and performing annealing so that predetermined crystalline LiF is contained on the surface of a recycled positive electrode active material and the amount of residual lithium is controlled; and having excellent initial discharge capacity, rate performance, ca-

**(Cont. next page)**

EP 4 421 915 A1

pacity characteristics, and resistance characteristics. In addition, the present invention has an effect of providing a method of recycling a positive electrode active material, characterized in that eco-friendliness is secured by not using acids in recovery and recycling processes; process cost is reduced because neutralization and wastewater treatment are not required accordingly; no metal element is discarded by recycling a positive electrode active material in an intact state without disassembling the positive electrode active material; the risk of toxic gas generation or explosion is excluded by not using an organic solvent; and economic feasibility and productivity are greatly improved by omitting a washing process.

[FIG. 1]

**Description**

[Technical Field]

[Cross-Reference to Related Applications]

This application claims priority to Korean Patent Application No. 10-2023-0080987, refiled on June 23, 2023, based on Korean Patent Application No. 10-2022-0082982, filed on July 6, 2022, and Korean Patent Application No. 10-2022-0082983, filed on July 6, 2022, in the Korean Intellectual Property Office, the disclosure of which is incorporated herein by reference.

The present invention relates to a recycled positive electrode active material, a method of recycling a positive electrode active material, and a secondary battery including the recycled positive electrode active material. More particularly, the present invention relates to a positive electrode active material prepared by firing a waste positive electrode containing a high-nickel (Ni) positive electrode material at a predetermined temperature, adding a lithium precursor immediately after the firing without a washing process, and performing annealing so that predetermined crystalline LiF is contained on the surface of a recycled positive electrode active material and the amount of residual lithium is controlled; and having excellent initial discharge capacity, rate performance, capacity characteristics, and resistance characteristics. In addition, the present invention relates to a method of recycling a positive electrode active material, characterized in that eco-friendliness is secured by not using acids in recovery and recycling processes; process cost is reduced because neutralization and wastewater treatment are not required accordingly; no metal element is discarded by recycling a positive electrode active material in an intact state without disassembling the positive electrode active material; the risk of toxic gas generation or explosion is excluded by not using an organic solvent; and economic feasibility and productivity are greatly improved by omitting a washing process.

[Background Art]

In general, a lithium secondary battery consists of a positive electrode formed by coating a metal foil, such as aluminum, with a positive electrode active material layer, a negative electrode formed by coating a metal foil, such as copper, with a negative electrode active material layer, a separator for preventing mixing of the positive and negative electrodes, an electrolyte solution that allows lithium ions to move between the positive and negative electrodes, and the like.

In the positive electrode active material layer, a lithium-based oxide is mainly used as an active material. In the negative electrode active material layer, a carbon material is mainly used as an active material. In general, the lithium-based oxide contains a rare metal such as cobalt, nickel, or manganese. Accordingly, studies on recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related arts for recovering rare metals from a waste positive electrode, after dissolving a waste positive electrode using hydrochloric acid, sulfuric acid, or nitric acid, rare metals such as cobalt, manganese, and nickel are extracted using an organic solvent, and then the extracted metals are used as raw materials for synthesizing a positive electrode active material.

However, in the case of the method of extracting rare metals using an acid, a neutralization process and a wastewater treatment process are necessarily required due to environmental pollution problems, which greatly increases process costs. In addition, lithium, which is the main metal of a positive electrode active material, cannot be recovered by the above method.

To solve these drawbacks, methods (direct recycling methods) of directly recycling a positive electrode active material from a waste positive electrode without decomposing the positive electrode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled positive electrode active material, which degrades the rate performance of a battery. In addition to the above disadvantages, waste gas is generated, and energy consumption is excessive.

In addition, when using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled positive electrode active material, and there is a risk of explosion due to hydrogen gas generated in a process of removing aluminum foil.

In addition, the crushing & screening method can be performed through the simplest process among the above methods. However, it is difficult to completely separate a current collector and a positive electrode active material, the particle size distribution of the positive electrode active material is changed during a crushing process, and the battery characteristics of the recycled positive electrode active material are degraded due to a residual binder.

Therefore, there is an urgent need to develop a method of safely recycling a positive electrode active material having improved rate performance in an environment-friendly manner at a low cost through a simple process without loss of metal elements from a waste positive electrode.

[Disclosure]

[Technical Problem]

Therefore, the present invention has been made in view of the above problems, and it is one object of the present invention to provide a positive electrode active material prepared by firing a waste positive electrode containing a high-nickel (Ni) positive electrode material at a predetermined temperature, adding a lithium precursor immediately after the firing without a washing process, and performing annealing so that predetermined crystalline LiF is contained on the surface of a recycled positive electrode active material and the amount of residual lithium is controlled and having excellent initial discharge capacity, rate performance, capacity characteristics, and resistance characteristics; and a method of recycling a positive electrode active material, characterized in that eco-friendliness is secured by not using acids in a process of recovering and recycling a positive electrode active material, process cost is reduced because neutralization and wastewater treatment are not required accordingly, no metal element is discarded by recycling a positive electrode active material in an intact state without disassembling the positive electrode active material, the risk of toxic gas generation or explosion is excluded by not using an organic solvent, and economic feasibility and productivity are greatly improved by omitting a washing process.

It is another object of the present invention to provide a secondary battery having excellent initial discharge capacity, rate performance, and capacity characteristics.

The above and other objects can be accomplished by the present invention described below.

[Technical Solution]

I) In accordance with one aspect of the present invention, provided is a recycled positive electrode active material including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, including 60 mol% or more of Ni, and containing crystalline LiF or 0.24 % by weight or less of residual $Li_2CO_3$.

II) In I), the crystalline LiF may exhibit a peak at 38 to 40° in an XRD spectrum based on 2theta.

III) In I) or II), the crystalline LiF may be included in an amount of 0.1 to 10 % by weight on a surface of the recycled positive electrode active material based on an XPS surface analysis spectrum.

IV) In I) to III), a surface of the recycled positive electrode active material may be coated with a coating agent containing a metal or carbon.

V) In I) to IV), the metal may be boron (B), tungsten (W), or a mixture thereof.

VI) In I) to V), the recycled positive electrode active material may have a powder resistance of 100 Q or less under a pressure of 800 kg or a powder resistance of 40 Q or less under a pressure of 2,000 kg.

VII) In accordance with another aspect of the present invention, provided is a method of recycling a positive electrode active material, the method including heat-treating a waste positive electrode having a positive electrode active material layer including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material formed on a current collector to thermally decompose a binder and a conductive material in the active material layer to separate the current collector from the active material layer and recover a positive electrode active material from the active material layer; adding a lithium precursor to the recovered positive electrode active material and performing annealing; and washing the annealed positive electrode active material.

VIII) In VII), in the washing, the annealed positive electrode active material and a washing liquid may be mixed in a weight ratio of 1:0.5 to 1:5.5.

IX) In VII) or VIII), in the washing, the annealed positive electrode active material and a washing liquid may be mixed in a weight ratio of 1:0.5 to 1:4.

X) In VII) to IX), the thermal decomposition may be performed at 300 to 650 °C.

XI) In VII) to X), in the annealing, the recovered positive electrode active material may contain crystallinity LiF.

XII) In VII) to XI), the lithium precursor may include one or more of LiOH, $Li_2CO_3$, $LiNO_3$, and $Li_2O$.

XIII) In VII) to XII), based on 100 mol% in total of lithium in a positive electrode active material used as a raw material when forming the positive electrode active material layer, the lithium precursor may be added in an amount corresponding to 1 mol% to 40 mol%.

XIV) In VII) to XIII), the annealing may be performed at 400 to 1,000 °C under an oxygen atmosphere or in air.

XV) In VII) to XIV), the washing may include performing filtration after mixing the annealed positive electrode active material and the washing liquid; and drying a solid positive electrode active material obtained after the filtration.

XVI) In VII) to XV), in the washing, the annealed positive electrode active material and the washing liquid may be mixed in a weight ratio of 1:1.5 to 1:5.5.

XVII) In VII) to XVI), the washing liquid may be water or a basic aqueous lithium compound solution.

XVIII) In VII) to XVII), the method may include obtaining a reusable positive electrode active material by coating a surface of the washed positive electrode active material.

XIX) In VII) to XVIII), in the surface coating, the surface may be coated with one or more of a metal, an organic metal, and a carbon component in a solid or liquid manner, and then may be heat-treated at 100 to 1,200 °C.

XX) In accordance with still another aspect of the present invention, provided is a recycled positive electrode active material prepared by the method of recycling a positive electrode active material according to VII) to XIX).

XXI) In accordance with still another aspect of the present invention, provided is a recycled positive electrode active material including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material and containing 0.24 % by weight or less of residual $Li_2CO_3$.

XXII) In accordance with yet another aspect of the present invention, provided is a secondary battery including the recycled positive electrode active material according to any one of I) to XXI).

[Advantageous Effects]

According to the present invention, the present invention has an effect of providing a positive electrode active material prepared by firing a waste positive electrode containing a high-nickel (Ni) positive electrode material at a predetermined temperature, adding a lithium precursor immediately after the firing without a washing process, and performing annealing so that predetermined crystalline LiF is contained on the surface of a recycled positive electrode active material and the amount of residual lithium is controlled; and having excellent initial discharge capacity, rate performance, capacity characteristics, and resistance characteristics. In addition, the present invention has an effect of providing a method of recycling a positive electrode active material, characterized in that eco-friendliness is secured by not using acids in a process of recovering and recycling a positive electrode active material; process cost is reduced because neutralization and wastewater treatment are not required accordingly; no metal element is discarded by recycling a positive electrode active material in an intact state without disassembling the positive electrode active material; the risk of toxic gas generation or explosion is excluded by not using an organic solvent; and economic feasibility and productivity are greatly improved by omitting a washing process.

[Description of Drawings]

The following drawings attached to the present specification illustrate embodiments of the present invention, and are intended to further understand the technical spirit of the present invention together with the detailed description to be described later, so the present invention is not limited to these drawings.

FIG. 1 shows the XRD spectra of the recycled or fresh positive electrode active materials prepared in Comparative Example 2, Example 1, and Comparative Example 1 (Note, Comparative Example 2, Example 1, and Comparative Example 1 are arranged in order from bottom to top).

FIG. 2 is an enlarged view of the peaks in the 2Theta value range of approximately 37° to 45° in the XRD spectrum of the recycled positive electrode active material prepared in Example 1.

FIG. 3 is an enlarged view of the peaks in the 2Theta value range of approximately 37.6° to 39.2° in the XRD spectrum of the recycled positive electrode active material prepared in Comparative Example 2.

FIG. 4 is a graph showing change in capacity depending on the number of cycles (Cycle No.) as a result of evaluating a coin cell for each of the recycled or fresh positive electrode active materials prepared in Example 1 and Comparative Examples 1 to 3.

FIG. 5 is a graph showing change in powder resistance depending on pressure for each of the recycled or fresh positive electrode active material powders prepared in Example 1 and Comparative Examples 1 and 2.

FIG. 6 is a graph showing change in resistance depending on SOC (%) as a result of evaluating a mono cell for each of the recycled or fresh positive electrode active materials prepared in Example 1 and Comparative Examples 1 and 2.

FIG. 7 is a graph showing change in capacity depending on the number of cycles (Cycle No.) as a result of evaluating a coin cell for each of the recycled or fresh positive electrode active materials prepared in Additional Examples 1 and 2 and Additional Comparative Examples 1 to 3.

FIG. 8 is a graph showing change in capacity depending on the number of cycles (Cycle No.) as a result of evaluating a coin cell for each of the recycled or fresh positive electrode active materials prepared in Additional Example 3 and Additional Comparative Examples 4 and 5.

FIG. 9 is a flowchart for explaining a process of recycling a positive electrode active material according to the present invention.

[Best Mode]

The present inventors confirmed that, while researching a direct recycling method to obtain a recycled positive electrode active material having excellent rate performance by directly recycling a positive electrode active material from a waste positive electrode without decomposing the positive electrode active material, when a waste positive electrode containing a high-nickel (Ni) positive electrode material was fired at a predetermined temperature, a lithium precursor was added thereto immediately after the firing without a washing process, and annealing was performed so that predetermined crystalline LiF was contained on the surface of a recycled positive electrode active material and the amount of residual lithium was controlled within a predetermined range, the battery characteristics of the recycled positive electrode active material were improved. Based on these results, the present inventors conducted further studies to complete the present invention.

Hereinafter, a recycled positive electrode active material, a method of recycling a positive electrode active material, and a secondary battery including the recycled positive electrode active material according to the present invention will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

**Recycled positive electrode active material**

A recycled positive electrode active material of the present invention includes one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, includes 60 mol% or more of Ni, and contains crystalline LiF or 0.24 % by weight or less of residual $Li_2CO_3$. In this case, initial discharge capacity, rate performance, capacity characteristics, and resistance characteristics may be excellent.

The recycled positive electrode active material may include preferably one or more selected from the group consisting of a lithium cobalt oxide such as $LiCoO_2$ (hereinafter referred to as "LCO"); a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance characteristics, and capacity characteristics may be excellent.

As a specific example, the recycled positive electrode active material may include a compound represented by Chemical Formula 1 below.

[Chemical Formula 1] $\quad Li_aNi_xMn_yCo_zM_wO_{2+\delta}$

In Chemical Formula 1, M includes one or more selected from the group consisting of B, W, Al, Ti, and Mg, 1 < a ≤ 1.1, 0 < x < 0.95, 0 < y < 0.8, 0 < z < 1.0, 0 ≤ w ≤ 0.1, -0.02 ≤ δ ≤ 0.02, and x + y + z + w = 1. In this case, electrochemical performance, resistance characteristics, and capacity characteristics may be excellent.

The recycled positive electrode active material includes Ni in an amount of preferably 80 mol% or more, more preferably 81 mol% or more. Within this range, initial discharge capacity, rate performance, capacity characteristics, and resistance characteristics may be excellent.

In the present disclosure, the Ni content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the Ni content.

The crystalline LiF may exhibit a peak at 38 to 40°, preferably 38.5 to 39° in an XRD spectrum based on 2theta. In this case, initial discharge capacity, rate performance, capacity characteristics, and resistance characteristics may be excellent.

For example, based on a total weight of the positive electrode active material, the crystalline LiF may be included in an amount of 0.1 to 1 % by weight, preferably 0.3 to 1 % by weight, more preferably 0.3 % by weight or more and less than to 1 % by weight. Within this range, initial discharge capacity, rate performance, capacity characteristics, and resistance characteristics may be excellent.

In the present disclosure, the crystalline LiF content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the crystalline LiF content. Here, the crystalline phase of LiF may be confirmed by an XRD spectrum, and the content of LiF may be measured by a method using IC.

For example, based on an XPS surface analysis spectrum, the crystalline LiF may be included on the surface of the recycled positive electrode active material in an amount of 0.1 to 10 % by weight, preferably 0.1 to 8 % by weight, more preferably 0.1 to 7 % by weight. Within this range, initial discharge capacity, rate performance, capacity characteristics, and resistance characteristics may be excellent.

In the present disclosure, the content of crystalline LiF on the surface of a recycled positive electrode active material may be measured using an X-ray photoelectron spectroscopy (XPS) surface analysis spectrum (K-alpha, Nexsa, Thermo Fisher Scientific). Based on the XPS surface analysis spectrum, the composition ratio of constituent elements or elements may be quantified using the area or height of photoelectrons emitted from the surface of a sample.

For example, the surface of the recycled positive electrode active material may be coated with a metal or carbon, preferably a metal. In this case, the structural stability of the positive electrode active material may be improved without chemical and physical change of the recycled positive electrode active material, thereby improving rate performance, lifespan characteristics, and electrochemical properties such as capacity. In addition, substitution with heterogeneous elements occurs on the surface of the positive electrode active material, and as a result, the amount of residual lithium and pH are reduced, thereby improving physicochemical properties.

The metal includes preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, based on 1 mol% of metals in the recycled positive electrode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the positive electrode active material.

In the surface coating, preferably, the surface may be coated with a coating agent including one or more of a metal, an organic metal, and a carbon component in a solid or liquid manner, and then may be heat-treated at 100 to 1,200 °C. In this case, structural stability and electrochemical performance may be improved while maintaining the intrinsic properties of the positive electrode active material.

The recycled positive electrode active material may have a powder resistance of preferably 100 Q or less, more preferably 80 Q or less, still more preferably 50 to 80 Q under a pressure of 800 kg. Within this range, rate performance may be excellent.

The recycled positive electrode active material may have a powder resistance of preferably 40 Q or less, more preferably 32 Q or less, still more preferably 32 to 20 Q under a pressure of 2,000 kg. Within this range, rate performance may be excellent.

In the present disclosure, the powder resistance may be measured using a powder resistance characteristic tester (HPRM-A2, Hantech Co., Ltd.). Specifically, the positive electrode active material is put into a holder of a powder resistance characteristic tester, resistance is measured every 400 kg, and the powder resistance of 5 points up to 2,000 kg is measured.

For example, the recycled positive electrode active material may have a fluorine (F) content of 1 % by weight or less, preferably 0.1 to 1 % by weight, more preferably 0.1 to 0.9 % by weight, still more preferably 0.4 to 0.7 % by weight. Within this range, excellent resistance characteristics, and capacity characteristics may be obtained.

In the present disclosure, the fluorine (F) content may be measured using an ICP analyzer. In this case, general ICP analyzers, which are widely used in laboratories, may be used, but there is no deviation depending on the measurement devices or methods.

The recycled positive electrode active material of the present invention includes one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, and includes 0.24 % by weight or less of residual $Li_2CO_3$. In this case, initial discharge capacity, rate performance, and capacity characteristics may be excellent.

In the recycled positive electrode active material, the amount of residual $Li_2CO_3$ may be preferably 0.15 % by weight or less, more preferably 0.10 % by weight or less, still more preferably 0.01 to 0.10 % by weight. Within this range, initial discharge capacity, rate performance, and capacity characteristics may be excellent.

In the recycled positive electrode active material, the amount of residual LiOH may be preferably 0.38 % by weight or less, more preferably 0.35 % by weight or less, still more preferably 0.01 to 0.35 % by weight. Within this range, initial discharge capacity, rate performance, and capacity characteristics may be excellent.

In the recycled positive electrode active material, the total amount of residual $Li_2CO_3$ and LiOH may be preferably 0.58 % by weight or less, more preferably 0.53 % by weight or less, still more preferably 0.50 % by weight or less, still more preferably 0.47 % by weight or less, still more preferably 0.01 to 0.47 % by weight. Within this range, initial discharge capacity, rate performance, and capacity characteristics may be excellent.

In the present disclosure, the amounts of LiOH and $Li_2CO_3$ remaining on the surface of the recycled positive electrode active material may be measured using a pH titrator (T5, Mettler Toledo Co.). Specifically, 5 g of the positive electrode active material is dispersed in 100 ml of distilled water and mixed at 300 rpm for 5 minutes, and then filtering is performed to filter out an active material and obtain a filtrate. Change in pH values is measured while titrating the filtrate with a 0.1 M HCl solution. Based on the measurement result, a pH titration curve is obtained. Using the pH titration curve, the amounts of residual LiOH and $Li_2CO_3$ in the positive electrode active material are calculated.

**Method of recycling positive electrode active material**

A method of recycling a positive electrode active material of the present invention includes a step of heat-treating a waste positive electrode having a positive electrode active material layer including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material formed on a current collector to thermally decompose a binder and a conductive material in the active material layer to separate the current collector from the active material layer and recover a positive electrode active material from the active material layer; a step of adding a lithium precursor to the recovered positive electrode active material and performing annealing; and a step of washing the annealed positive electrode active material. In this case, the surface of the recycled positive electrode active material may include predetermined crystalline LiF, a washing liquid required to remove residual lithium on the surface of the positive electrode active material may be significantly reduced, and the positive electrode active material may have excellent initial discharge capacity, rate performance, capacity characteristics, and resistance characteristics. In addition, eco-friendliness may be secured by not using acids in a process of recovering and recycling a positive electrode active material, process cost may be reduced because neutralization and wastewater treatment are not required accordingly, no metal element is discarded by recycling a positive electrode active material in an intact state without disassembling the positive electrode active material, the risk of toxic gas generation or explosion may be excluded by not using an organic solvent, and economic feasibility and productivity may be greatly improved by omitting a washing process.

Hereinafter, each step of the method of recycling a positive electrode active material will be described in detail.

**(a) Recovering positive electrode active material from waste positive electrode**

The step (a) of recovering a positive electrode active material from a waste positive electrode according to the present invention may preferably be a step of heat-treating a waste positive electrode having a positive electrode active material layer including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material formed on a current collector to thermally decompose a binder and a conductive material in the active material layer to separate the current collector from the active material layer and recover a positive electrode active material from the active material layer. In this case, a simple process may be implemented, and a binder, a conductive material, and a current collector may be completely removed.

The waste positive electrode may be preferably a positive electrode separated from a lithium secondary battery discarded after use, or a defective positive electrode sheet or a positive electrode scrap generated in a process of manufacturing a lithium secondary battery, more preferably a positive electrode scrap remaining after blanking a positive electrode sheet to obtain a positive electrode plate.

The positive electrode active material layer of step (a) may preferably include a positive electrode active material, a binder, and a conductive material.

The positive electrode active material may include preferably one or more selected from the group consisting of a lithium cobalt oxide such as $LiCoO_2$ (hereinafter referred to as "LCO"); a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide, more preferably a nickel manganese-based lithium composite metal oxide, an NCM-based lithium composite transition metal oxide, or a mixture thereof. In this case, reversible capacity and thermal stability may be excellent.

As another specific example, the positive electrode active material may be a compound represented by Chemical Formula 1 below.

[Chemical Formula 1] $\quad\quad Li_aNi_xMn_yCo_zM_wO_{2+\delta}$

In Chemical Formula 1, M includes one or more selected from the group consisting of B, W, Al, Ti, and Mg, $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x + y + z + w = 1$.

For example, the positive electrode active material may contain Ni in an amount of 60 mol% or more, preferably 80 mol% or more, more preferably 81 mol% or more. Within this range, initial discharge capacity, rate performance, capacity characteristics, and resistance characteristics may be excellent.

For example, the crystalline LiF may exhibit a peak at 38 to 40°, preferably at 38.5 to 39° in an XRD spectrum based on 2theta. In this case, initial discharge capacity, rate performance, capacity characteristics, and resistance characteristics may be excellent.

For example, based on a total weight of the positive electrode active material, the crystalline LiF may be included in an amount of 0.1 to 1 % by weight, preferably 0.3 to 1 % by weight, more preferably 0.3 % by weight or more and less than 1 % by weight. Within this range, initial discharge capacity, rate performance, capacity characteristics, and resistance characteristics may be excellent.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment may be performed in air or under an oxygen atmosphere, preferably in air. In this case, since the binder and the carbon components in the conductive material react with oxygen to generate gases such as CO and $CO_2$ and then disappear, the binder and the conductive material may be completely removed.

For example, the heat treatment temperature may be 300 to 650 °C, preferably 400 to 600 °C, more preferably 500 to 600 °C, still more preferably 530 to 580 °C. Within this range, since a current collector is not melted and only a binder is removed, a positive electrode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a positive electrode active material may be easily separated from the current collector.

In the present disclosure, the heat treatment time is time of heat treatment performed at the corresponding heat treatment temperature, and does not include time required to reach the corresponding heat treatment temperature.

For example, the positive electrode scraps may be defined as follows. Aluminum foil, which is a long sheet-shaped positive electrode current collector, is coated with a positive electrode active material layer including a positive electrode active material, a conductive material, and a binder to obtain a positive electrode sheet. Then, a positive electrode plate is obtained by blanking the positive electrode sheet to a certain size. At this time, portions remaining after the blanking may be the positive electrode scraps. The blanking may be a means for cutting the positive electrode sheet.

In addition, the positive electrode active material layer is formed by coating the aluminum foil with slurry obtained by mixing a positive electrode active material, a conductive material, a binder, and a solvent. Since the slurry is very sensitive to environmental factors such as temperature, it is very difficult to determine the coating conditions. Accordingly, waste positive electrode sheets are generated until the conditions for manufacturing the positive electrode sheet of desired quality are determined through a predetermined test.

For reference, in the following examples, positive electrode scraps were used as a waste positive electrode.

**(b) Adding lithium precursor to recovered positive electrode active material and performing annealing**

The method of recycling a positive electrode active material according to the present invention includes a step (b) of adding a lithium precursor to the recovered positive electrode active material and performing annealing. In this case, the surface of the recycled positive electrode active material may contain predetermined crystalline LiF, thereby providing a positive electrode active material having excellent initial discharge capacity, rate performance, capacity characteristics, and resistance characteristics. In addition, since a process of washing a recovered active material is omitted, economic feasibility and productivity may be greatly improved.

The step (b) of performing annealing may be preferably a step of adding a lithium precursor to the recovered positive electrode active material and performing annealing at 400 to 1,000 °C under an oxygen ($O_2$) atmosphere or in air. In this case, by improving crystallinity through increase in crystallinity or recovery of a crystal structure, the battery characteristics of a recycled positive electrode active material may be improved.

The recovered positive electrode active material may preferably contain crystallinity LiF. In this case, a positive electrode active material having excellent initial discharge capacity, rate performance, capacity characteristics, and resistance characteristics may be provided.

The lithium precursor may preferably include one or more selected from the group consisting of LiOH, $Li_2CO_3$, $LiNO_3$, and $Li_2O$.

The lithium precursor may be preferably added in an amount corresponding to the reduced amount of lithium based on a molar ratio of lithium in the positive electrode active material of step (a) based on the amount of lithium in the recovered positive electrode active material. More preferably, the lithium precursor may be added in an amount corresponding to a molar ratio of lithium of 0.0001 to 0.2 based on the molar ratio of lithium in the positive electrode active material of step (a). Within this range, insufficient lithium in the recycled positive electrode active material may be supplemented, and thus crystallinity may be increased or a crystal structure may be recovered, thereby improving crystallinity. As a result, the battery characteristics of the recycled positive electrode active material may be improved.

The lithium precursor may be added in an amount corresponding to preferably 1 to 40 mol%, more preferably 1 to 15 mol%, still more preferably 7 to 11 mol% based on 100 mol% in total of lithium in a positive electrode active material as a raw material used to form the positive electrode active material layer. Within this range, since a residual precursor that causes an increase in the resistance of the recycled positive electrode active material is not left, battery characteristics may be improved.

The annealing temperature may be adjusted within a limited range according to the melting point of the lithium precursor. For example, in the case of $LiCO_3$, the melting point thereof is 723 °C, and thus annealing may be performed at preferably 700 to 900 °C, more preferably 710 to 780 °C. In the case of LiOH, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature is preferably a temperature exceeding the melting point of the lithium precursor. However, when the annealing temperature exceeds 1,000 °C, thermal decomposition of the positive electrode active material may occur, resulting in deterioration of battery performance. Accordingly, the annealing temperature is preferably 1,000 °C or lower.

**(c) Washing annealed positive electrode active material**

The method of recycling a positive electrode active material according to the present invention includes a step (c) of washing the annealed positive electrode active material. In this case, an excess of residual lithium precursor due to the high content of Ni may be removed with a small amount of washing liquid. Thus, battery performance degradation and gas generation due to reaction between the residual lithium precursor and the electrolyte solution may be prevented, and a waste water treatment process may be omitted.

The washing may preferably include a step of performing filtration after mixing the annealed positive electrode active material and the washing liquid and a step of drying a solid positive electrode active material obtained after the filtration. In this case, an excess of lithium remaining in the positive electrode active material may be effectively removed.

The washing may preferably include a step of mixing the annealed positive electrode active material and the washing liquid in a weight ratio of 1:0.5 to 1:5.5 and performing filtration and a step of drying a solid positive electrode active material obtained after the filtration. In this case, lithium precursors such as LiOH and $Li_2CO_3$ remaining due to an excess of lithium added to suppress the cation mixing phenomenon that easily occurs in a high-nickel positive electrode active material may be effectively removed. The cation mixing phenomenon occurs because the particles of nickel and lithium are similar in size.

In the present disclosure, the high-nickel positive electrode active material refers to a positive electrode active material containing 60 mol% or more of nickel.

The annealed active material and the washing liquid may be mixed in a weight ratio of preferably 1:1.5 to 1:4, more preferably 1:1.5 to 1:3, still more preferably 1:1.5 to 1:2.5. In this case, lithium precursors such as LiOH and $Li_2CO_3$ remaining due to an excess of lithium added to suppress the cation mixing phenomenon that easily occurs in a high-nickel positive electrode active material may be effectively removed.

In particular, when the annealed active material and the washing liquid are mixed in a weight ratio of 1:1.5 to 1:3, preferably 1:1.5 to 2.5, the initial discharge capacity (DCH) and efficiency of the recycled positive electrode active material may be further improved.

As another example, the annealed active material and the washing liquid may be mixed in a weight ratio of preferably 1:0.5 to 1:4, more preferably 1:0.5 to 1:3.5, still more preferably 1:0.5 to 1:2.5, still more preferably 1:1 to 1:2. In this case, the amount of the washing liquid may be significantly reduced, eliminating the need for waste water treatment. In addition, lithium precursors such as LiOH and $Li_2CO_3$ remaining in the positive electrode active material may be effectively removed. Conventionally, a positive electrode active material recovered after heat-treating a waste positive electrode is washed with water and then annealed. In this case, to remove residual lithium in the washing step, a washing liquid equal to 30 times the amount of the positive electrode active material is required. However, according to the present invention, since a recovered positive electrode active material is annealed and then washed, a small amount of washing liquid is required. Thus, waste water treatment is unnecessary, and residual lithium may be removed more effectively than in the conventional case.

The washing liquid may be preferably water or a basic aqueous lithium compound solution, more preferably water. In this case, lithium precursors such as LiOH and $Li_2CO_3$ remaining due to an excess of lithium added to suppress the cation mixing phenomenon that easily occurs in a high-nickel positive electrode active material may be effectively removed with a small amount of washing liquid. Thus, waste water treatment is unnecessary, and the rate performance of a battery may be greatly improved.

The water may be preferably distilled water or deionized water. In this case, lithium precursors such as LiOH and $Li_2CO_3$ remaining on the surface of the positive electrode active material may be effectively removed with a small amount of washing liquid. Thus, waste water treatment is unnecessary, and the rate performance of a battery may be greatly improved.

The basic aqueous lithium compound solution may include a lithium compound in an amount of preferably greater than 0 % by weight and 15 % by weight or less, more preferably greater than 0 % by weight and 10 % by weight or less. In this case, lithium precursors such as LiOH and $Li_2CO_3$ remaining on the surface of the positive electrode active material may be effectively removed with a small amount of washing liquid. Thus, waste water treatment is unnecessary, and the rate performance of a battery may be greatly improved.

Mixing the annealed positive electrode active material and the washing liquid is preferably performed by stirring. The stirring is not particularly limited, and is mechanical stirring or ultrasonic stirring.

The stirring may be performed preferably within 30 minutes, more preferably within 20 minutes, still more preferably within 15 minutes, still more preferably 5 to 10 minutes. Within this range, residual lithium may be effectively removed.

The mechanical stirring may be preferably performed at 250 to 350 RPM for 3 to 10 minutes.

The filtration is preferably vacuum filtration using a filter, and the drying is vacuum drying at 120 to 140 °C.

In the present disclosure, vacuum drying methods commonly practiced in the art to which the present invention pertains may be used in the present invention without particular limitation.

**(d) Obtaining reusable positive electrode active material by coating surface of washed positive electrode active material**

The method of recycling a positive electrode active material according to the present invention include a step (d) of obtaining a reusable positive electrode active material by coating the surface of the washed positive electrode active material. In this case, structural stability and electrochemical performance may be improved while maintaining the intrinsic properties of the positive electrode active material.

In the surface coating, preferably, the surface may be coated with a coating agent including one or more of a metal, an organic metal, and a carbon component in a solid or liquid manner, and then may be heat-treated at 100 to 1,200 °C. In this case, structural stability and electrochemical performance may be improved while maintaining the intrinsic properties of the positive electrode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the positive electrode active material excluding a solvent, based on 1 mol% of the metal in the positive electrode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the positive electrode active material.

The heat treatment temperature may preferably 100 to 1,000 °C, more preferably 200 to 1,000 °C, still more preferably 200 to 500 °C. Within this range, performance degradation due to thermal decomposition of the positive electrode active material may be prevented, and structural stability and electrochemical performance may be improved.

The heat treatment time may be preferably 1 to 16 hours, more preferably 3 to 7 hours. Within this range, structural stability and electrochemical performance may be improved while maintaining the intrinsic properties of the positive electrode active material.

Coating methods commonly used in the art to which the present invention pertains may be used as the coating method of the present invention without particular limitation. For example, a liquid method of mixing a positive electrode active material and a liquid coating agent, a mechanochemical method using the high mechanical energy of ball milling, a fluid bed coating method, a spray drying method, a precipitation method of precipitating a coating agent onto the surface of a positive electrode active material in an aqueous solution, a method using reaction between a vapor phase coating agent and a positive electrode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1,000 nm and a specific surface area of 10 to 100 $m^2/g$, more preferably an average diameter of 10 to 100 nm and a specific surface area of 20 to 100 $m^2/g$. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

In the positive electrode active material according to the method of recycling a positive electrode active material of the present invention, the amount of residual $Li_2CO_3$ may be preferably 0.24 % by weight or less, more preferably 0.15 % by weight or less, still more preferably 0.10 % by weight or less, still more preferably 0.01 to 0.10 % by weight. Within this range, initial discharge capacity, rate performance, and capacity characteristics may be excellent.

In the positive electrode active material according to the method of recycling a positive electrode active material, the amount of residual LiOH may be preferably 0.38 % by weight or less, more preferably 0.35 % by weight or less, still more preferably 0.01 to 0.35 % by weight. Within this range, initial discharge capacity, rate performance, and capacity characteristics may be excellent.

In the positive electrode active material according to the method of recycling a positive electrode active material, the total amount of residual $Li_2CO_3$ and LiOH may be preferably 0.58 % by weight or less, more preferably 0.53 % by weight or less, still more preferably 0.50 % by weight or less, still more preferably 0.47 % by weight or less, still more preferably 0.01 to 0.47 % by weight. Within this range, initial discharge capacity, rate performance, and capacity characteristics may be excellent.

In addition, the present invention may provide a recycled positive electrode active material prepared using the method of recycling a positive electrode active material. In this case, initial discharge capacity, rate performance, capacity characteristics, and resistance characteristics may be excellent.

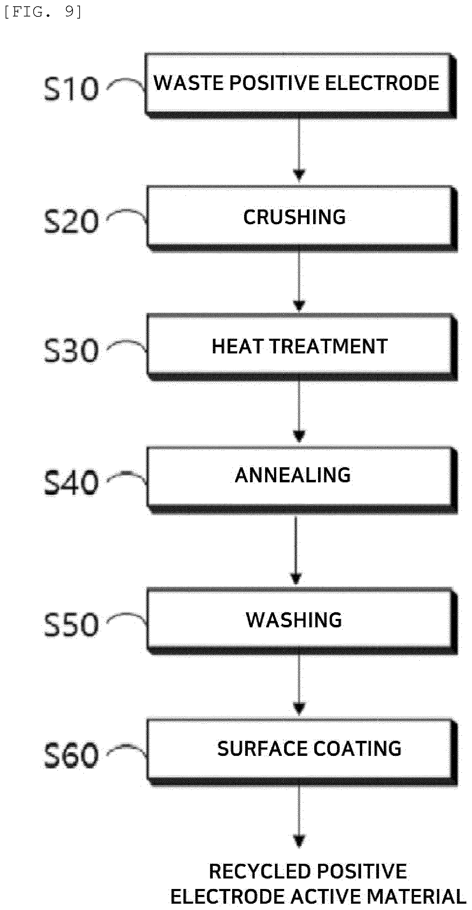

FIG. 9 below is a flowchart for explaining a process of recycling a positive electrode active material according to one embodiment of the present invention.

Referring to FIG. 9, first, positive electrode scraps are prepared using waste positive electrodes (step S10). For example, slurry is obtained by adding N-methyl pyrrolidone (NMP) to an NCM-based lithium composite transition metal oxide, carbon black, and polyvinylidene fluoride and mixing these components. Then, aluminum foil is coated with the slurry and dried in a vacuum oven at about 120 °C to manufacture a positive electrode sheet. Then, a positive electrode plate is obtained by blanking the positive electrode sheet to a certain size. At this time, portions remaining after blanking are positive electrode scraps.

In the positive electrode scraps, a positive electrode active material layer is formed on aluminum foil. After a solvent is volatilized, the positive electrode active material layer has a structure in which a positive electrode active material and a conductive material are bonded by a binder. Accordingly, when the binder is removed, the positive electrode active material is separated from the aluminum foil.

Next, the prepared positive electrode scraps are crushed to an appropriate size (step S20). Here, the crushing involves cutting or shredding the positive electrode scraps into easy-to-handle sizes. As a specific example, the crushed positive electrode scraps may have a size of 1 cm × 1 cm. For example, the crushing may be performed using various dry crushing equipment such as a hand-mill, a pin-mill, a disk-mill, a cutting-mill, and a hammer-mill. In addition, to increase productivity, the crushing may be performed using a high-speed cutter.

Preferably, in consideration of equipment used in handling positive electrode scraps and subsequent processes, whether to perform the crushing, the size of pieces, and the like may be determined. For example, when equipment capable of continuous processing is used, since high fluidity is required, positive electrode scraps must be crushed into small pieces.

Next, the positive electrode scraps are heat-treated to recover a positive electrode active material (step S30). Here, the heat treatment is performed to thermally decompose a binder in an active material layer.

Through the heat treatment, the binder and the conductive material in the active material layer are thermally decomposed into $CO_2$ and $H_2O$ and removed. Since the binder is removed, the positive electrode active material may be separated from a current collector, and the separated positive electrode active material in powder form may be easily selected. Accordingly, in step S30, the active material layer may be separated from the current collector, and the positive electrode active material in the active material layer may be recovered in powder form.

The heat treatment should be performed in air or under an oxygen atmosphere. When the heat treatment is performed in a reducing gas or under an inert gas atmosphere, the binder and the conductive material are carbonized without being thermally decomposed. In this case, carbon components remain on the surface of the positive electrode active material, and the performance of a recycled positive electrode active material is degraded. However, when the heat treatment is performed in air or under an oxygen atmosphere, carbon components in the binder and conductive material react with oxygen to generate gases such as CO and $CO_2$ and disappear. As a result, the binder and the conductive material may be completely removed.

The heat treatment is performed at preferably 300 to 650 °C, as a specific example, 550 °C. When the heat treatment is performed at a temperature of less than 300 °C, it is difficult to remove the binder, so the current collector may not be separated. When the heat treatment is performed at a temperature of exceeding 650 °C, since the current collector melts, the current collector may not be separated.

The heat treatment is performed at a temperature-increasing rate of preferably 1 to 20 °C/min, more preferably 3 to 10 °C/min, as a specific example, 5 °C/min. Within this range, heat treatment may be performed without applying excessive force to heat treatment equipment, and application of thermal shock to positive electrode scraps may be prevented.

For example, the heat treatment may be performed for a time sufficient to thermally decompose the binder, preferably for 30 minutes or more, more preferably for 30 minutes to 5 hours, as a specific example, within 30 minutes. Within this range, the binder may be sufficiently thermally decomposed, and thermal decomposition efficiency may be excellent.

The heat treatment may be performed using various types of furnaces, e.g., a box-type furnace. In addition, in consideration of productivity, the heat treatment may be performed using a rotary kiln capable of continuous treatment.

After the heat treatment, slow cooling or rapid cooling may be performed in the atmosphere.

Next, a lithium precursor is added to the recovered positive electrode active material, and then annealing is performed (step S40).

In the annealing step, a lithium precursor is added to the recovered positive electrode active material without washing, and annealing is performed. In this case, crystalline LiF formed on the surface of the positive electrode active material in the heat treatment step S30 is included in the recycled positive electrode active material. When the recycled positive electrode active material is used to manufacture a secondary battery, battery characteristics may be improved.

In addition, loss of lithium in the positive electrode active material occurs during preceding step S30. In step S40, the loss amount of lithium is supplemented. In addition, during the preceding step, a deformed structure (e.g., $Co_3O_4$ in the case of an LCO active material) may be formed on the surface of the positive electrode active material. In step S40, the crystal structure of the positive electrode active material may be recovered through annealing, thereby improving the battery characteristics of a recycled positive electrode active material, or restoring the battery characteristics of the recycled positive electrode active material to the level of battery characteristics of a fresh positive electrode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh positive electrode active material contained in the positive electrode active material layer, the lithium precursor is preferably added in a minimum amount corresponding to the lost lithium molar ratio. When an excess of lithium precursor is added relative to the amount of lithium lost, the unreacted lithium precursor may remain in a recycled positive electrode active material, which increases resistance. Accordingly, an appropriate amount of the lithium precursor needs to be added. For example, when the molar ratio of lithium to other metals in a fresh positive electrode active material is 1, the lithium precursor may be added in an amount such that lithium is in a molar ratio of 0.001 to 0.4, preferably an amount such that lithium is in a molar ratio of 0.01 to 0.2.

As a specific example, when the lithium precursor is added at a molar ratio of 0.09 to 0.1 (based on lithium metal), which is a loss ratio relative to a lithium content in a fresh positive electrode active material, based on ICP analysis results, the capacity may be increased to a level equivalent to that of the fresh positive electrode active material. Here, the ICP analysis results have an error value of about $\pm 0.02$.

Specifically, based on 100 mol% in total of lithium in the positive electrode active material used as a raw material when forming the positive electrode active material layer, the lithium precursor may be added in an amount corresponding to 1 to 40 mol%, preferably 1 to 15 mol%.

For example, the annealing may be performed under an oxygen ($O_2$) atmosphere or in air at 400 to 1,000 °C, preferably at 600 to 900 °C. In this case, the temperature should be determined within a limited range according to the type of the lithium precursor.

The annealing temperature is preferably a temperature exceeding the melting point of the lithium precursor. However, since performance degradation occurs due to thermal decomposition of the positive electrode active material at a temperature exceeding 1,000 °C, the annealing temperature should not exceed 1,000 °C. When $Li_2CO_3$ is used as the lithium precursor, the annealing temperature is preferably 700 to 900 °C, more preferably 710 to 780°C, most preferably 750 to 780 °C. In addition, when LiOH is used as the lithium precursor, the annealing temperature is preferably 400 to 600 °C, more preferably 450 to 480 °C, most preferably 470 to 480 °C.

For example, the annealing time is preferably 1 to 15 hours, more preferably 4 to 6 hours. When the annealing time is long, a crystal structure may be sufficiently recovered, but even long-term annealing does not significantly affect performance. In this case, the same or similar equipment as in step S30 of performing heat treatment may be used as the annealing equipment.

Next, the annealed positive electrode active material is washed (step S50).

Since a lithium precursor not used in the reaction in the annealing step S40 remains in the form of LiOH or $Li_2CO_3$ on the surface of the positive electrode active material, a residual lithium removal process is required to remove the residual lithium. In particular, a high-nickel (Ni) positive electrode active material requires an excess of Li due to the cation mixing phenomenon, which promotes retention of lithium impurities such as lithium carbonate ($Li_2CO_3$) on the surface. Since these impurities react with an electrolyte solution to degrade battery performance and generate gas, the impurities must be completely removed.

In the washing, the annealed positive electrode active material and the washing liquid are mixed in a weight ratio of 1:0.5 to 1:5.5, preferably 1:0.5 to 1:5, more preferably 1:1 to 1:3, still more preferably 1:1 to 1:2.5 and filtered to obtain a solid positive electrode active material. Then, the solid positive electrode active material is dried.

Alternatively, in the washing, the annealed positive electrode active material and the washing liquid are mixed in a weight ratio of preferably 1:0.5 to 1:4, more preferably 1:0.5 to 1:3.5, still more preferably 1:0.5 to 1:2.5, still more preferably 1:1 to 1:2 and filtered to obtain a solid positive electrode active material. Then, the solid positive electrode active material is dried.

As the washing liquid, distilled water or a basic aqueous lithium compound solution containing a basic lithium compound in an amount of greater than 0 % by weight and 10 % by weight or less may be preferably used. More preferably, distilled water may be used as the washing liquid. In this case, safety and economic feasibility may be secured, and elution of transition metals contained in the positive electrode active material may be prevented.

In the washing, the annealed positive electrode active material and the washing liquid are mixed in a weight ratio of preferably 1:1 or 1:2 and filtered to obtain a solid positive electrode active material. Then, the solid positive electrode active material is dried.

Mixing the annealed positive electrode active material and the washing liquid is preferably performed by stirring. The stirring is not particularly limited, and is mechanical stirring or ultrasonic stirring.

The mechanical stirring may be preferably performed at 250 to 350 RPM for 3 to 10 minutes.

The filtration is preferably vacuum filtration using a filter, and the drying is vacuum drying at 120 to 140 °C.

Next, as an optional step, the surface of the washed positive electrode active material may be coated (step S60).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is high, due to thermal decomposition of the positive electrode active material, battery performance may deteriorate.

Specifically, when the washed positive electrode active material is coated with a metal oxide such as B, W, and B-W or an acid and heat-treated, a surface protection layer such as a lithium boron oxide layer is formed on the surface of the positive electrode active material.

The surface coating may be performed using a solid-phase or liquid-phase method, as a specific example, mixing, milling, spray drying, or grinding.

When the molar ratio of lithium to other metals in the positive electrode active material in the annealing step S40 is 1:1, in the surface coating step S60, lithium in the positive electrode active material reacts with the coating agent, and the molar ratio of lithium to other metal in the positive electrode active material is less than 1:1. In this case, the capacity of a battery containing the recycled positive electrode active material may not be fully (up to 100 %) expressed. However, in annealing step S40, when an excess of the lithium precursor is added so that lithium is contained in a greater molar ratio of 0.0001 to 0.1 compared to other metals in the positive electrode active material, in the surface coating step S60, a surface protection layer is formed, and the molar ratio of lithium to other metals in the positive electrode active material becomes 1:1, thereby preventing battery capacity degradation.

## Secondary battery

A secondary battery of the present invention includes the recycled positive electrode active material. In this case, since predetermined crystalline LiF is contained on the surface of the positive electrode active material, or lithium remaining on the surface of the positive electrode active material is significantly reduced, initial discharge capacity, rate performance, capacity characteristics, and resistance characteristics may be excellent. In addition, since acids and organic solvents are not used in the process of recovering and recycling a positive electrode active material, eco-friendliness may be secured. In particular, since an initial washing process is omitted, economic feasibility and productivity may be excellent.

Description of the secondary battery of the present invention may include all of the description of the recycled positive electrode active material and the method of recycling a positive electrode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

After blanking a positive electrode plate, discarded positive electrode scraps (current collector: aluminum foil, positive electrode active material: NCM-based lithium composite transition metal oxide (nickel content: 85 mol%)) were crushed, and the crushed scraps were heat-treated at 550 °C for 30 minutes in air to remove a binder and a conductive material and separate a current collector and a positive electrode active material. Through these processes, the positive electrode active material was recovered. At this time, temperature was increased to the heat treatment temperature at a temperature-increasing rate of 5 °C/min, and air was supplied at a rate of 3 L/min.

LiOH as a lithium precursor was added to the recovered positive electrode active material, and annealing was performed at a firing temperature of 750 °C for 5 hours in air. At this time, air was supplied at a rate of 3 L/min. Based on 100 mol% in total of lithium in the positive electrode active material as a raw material, the lithium precursor was added in an amount corresponding to 16 mol% of lithium.

The annealed positive electrode active material and distilled water were mixed in a weight ratio of 1:2 and stirred at 300 rpm for 5 minutes, and then vacuum filtration was performed to obtain solids. The solids were subjected to vacuum drying at 130 °C for 12 hours to obtain a washed positive electrode active material.

The washed positive electrode active material was coated with boric acid and heated at 300 °C for 5 hours to obtain a recycled positive electrode active material as a final product. At this time, boric acid was added in an amount corresponding to 1,000 ppm of boron lost in the previous process, the heating was performed at a temperature-increasing rate of 2 °C/min until the heat treatment temperature was reached, and air was supplied at a rate of 3 L/min.

The molar ratio between lithium and other metals in the positive electrode active material was measured using an IC analyzer. In this case, general ICP analyzers, which are widely used in laboratories, may be used, but there is no deviation depending on the measurement devices or methods.

In addition, the LiF content was measured using an IC analyzer (IC6000, Thermo Fisher Scientific) capable of detecting F anions. Specifically, 50 mg to 100 mg of the positive electrode active material was placed in a Corning tube, and elution was performed for 1 day using 50 g of ultrapure water. Then, after dilution, the LiF content was measured using an IC analyzer. At this time, as for the LiF content, it was assumed that all of the detected F content was in the form of LiF combined with Li at a molar ratio of 1:1, and the detected F content was regarded as the LiF content.

Example 2

A recycled positive electrode active material was prepared in the same manner as in Example 1 except that, in the annealing step of Example 1, based on 100 mol% in total of lithium in the positive electrode active material as a raw material, LiOH as a lithium precursor was added to the recovered positive electrode active material in an amount corresponding to 17 mol%.

Example 3

A recycled positive electrode active material was prepared in the same manner as in Example 1 except that, in the annealing step of Example 1, based on 100 mol% in total of lithium in the positive electrode active material as a raw material, LiOH as a lithium precursor was added to the recovered positive electrode active material in an amount corresponding to 18 mol%.

Example 4

A recycled positive electrode active material was prepared in the same manner as in Example 3 except that, in the annealing step of Example 3, the firing temperature was changed to 730 °C.

Example 5

A recycled positive electrode active material was prepared in the same manner as in Example 3 except that, in the annealing step of Example 3, the firing temperature was changed to 710 °C.

Example 6

A recycled positive electrode active material was prepared in the same manner as in Example 1 except that, in the washing step of Example 1, the annealed positive electrode active material and distilled water were mixed in a weight ratio of 1:5.

Example 7

A recycled positive electrode active material was prepared in the same manner as in Example 1 except that, in the washing step of Example 1, the annealed positive electrode active material and distilled water were mixed in a weight ratio of 1:10.

Comparative Example 1

A fresh NCM-based lithium composite transition metal oxide (Molar ratio of Ni:Co:Mn is 85:5:8) was used instead of the recycled active material.

Comparative Example 2

A recycled positive electrode active material was prepared in the same manner as in Example 1 except that the recovered positive electrode active material was not provided to the annealing step immediately, but the solids obtained by washing with distilled water twice were provided to the annealing step. At this time, when the recovered positive electrode active material was washed, the recovered positive electrode active material and distilled water were mixed in a weight ratio of 1:30 and stirred at 300 rpm for 10 minutes, and then vacuum filtration was performed to obtain solids. Then, the solids and distilled water were mixed in a weight ratio of 1:10, and washing and filtration were performed to obtain final solids.

Comparative Example 3

A recycled positive electrode active material was prepared in the same manner as in Comparative Example 2 except that the step of washing the annealed positive electrode active material was omitted.

Comparative Example 4

After blanking a positive electrode plate, discarded positive electrode scraps (current collector: aluminum foil, positive electrode active material: NCM-based lithium composite transition metal oxide (nickel content: 85 mol%)) were crushed, and the crushed scraps were heat-treated at 550 °C for 30 minutes in air to remove a binder and a conductive material and separate a current collector and a positive electrode active material. Through these processes, the positive electrode active material was recovered. At this time, temperature was increased to the heat treatment temperature at a temperature-increasing rate of 5 °C/min, and air was supplied at a rate of 3 L/min.

LiOH as a lithium precursor was added to the recovered positive electrode active material, and annealing was performed at a firing temperature of 750 °C for 5 hours in air. At this time, air was supplied at a rate of 3 L/min. Based on 100 mol% in total of lithium in the positive electrode active material as a raw material, the lithium precursor was added in an amount corresponding to 16 mol%.

The annealed positive electrode active material was coated with boric acid without washing and heated at 300 °C for 5 hours to obtain a recycled positive electrode active material as a final product. At this time, boric acid was added in an amount corresponding to 1,000 ppm of boron lost in the previous process, the heating was performed at a temperature-increasing rate of 2 °C/min until the heat treatment temperature was reached, and air was supplied at a rate of 3 L/min.

[Test Example I: XRD analysis]

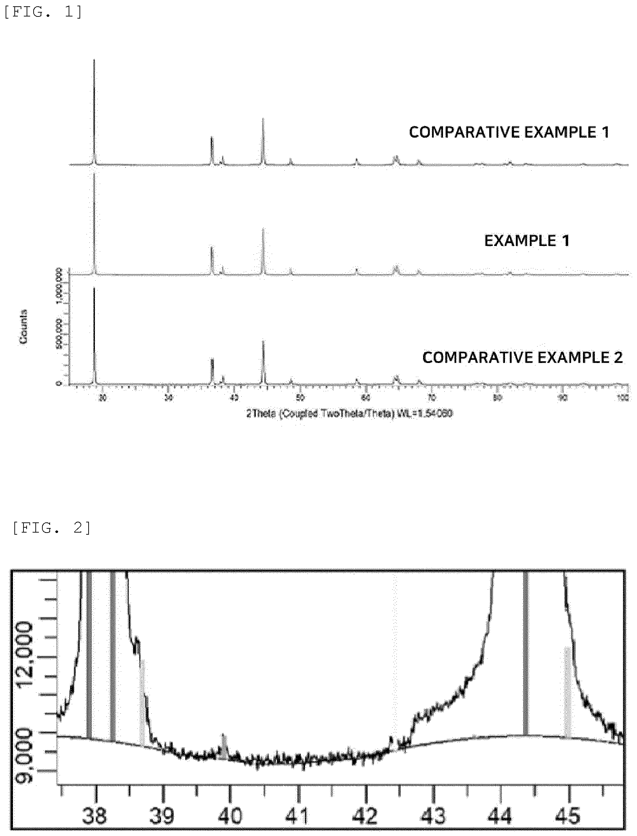

The LiF peaks of the recycled or fresh positive electrode active materials obtained in Example 1 and Comparative Examples 1 and 2 were confirmed using an X-ray diffractometer (Bruker D8 Endeavor) by XRD analysis, and the results are shown in FIGS. 1 to 3 below. At this time, voltage and current applied to a Cu target were 40 kV and 40 mA, respectively, and the measurement range of 2theta ($2\theta$) was 10° to 125°, and scans were performed for 0.25 seconds at every 0.01°. In addition, a variable divergence slit (6 mm) was used, a large PMMA holder (diameter = 20 mm) was used to remove background noise caused by the PMMA holder, and the peak intensity ratio was measured using the EVA program (Bruke Co.).

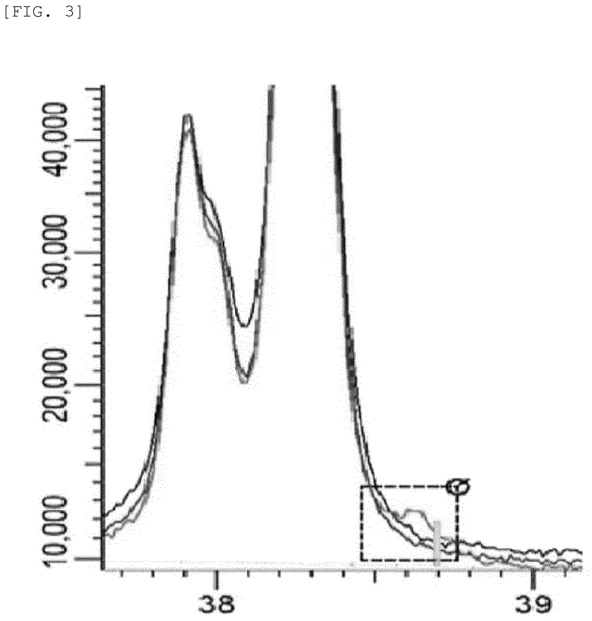

As shown in FIG. 1 below, the recycled positive electrode active material prepared in Example 1 exhibits an LiF peak around a 2Theta value of 38 to 40° in the XRD spectrum (see FIGS. 1 and 2). In contrast, the fresh positive electrode active material of Comparative Example 1 and the recycled positive electrode active material prepared in Comparative Example 2 exhibit no LiF peak in the XRD spectrum (see FIGS. 1 and 3).

[Test Example II: CHC cell evaluation]

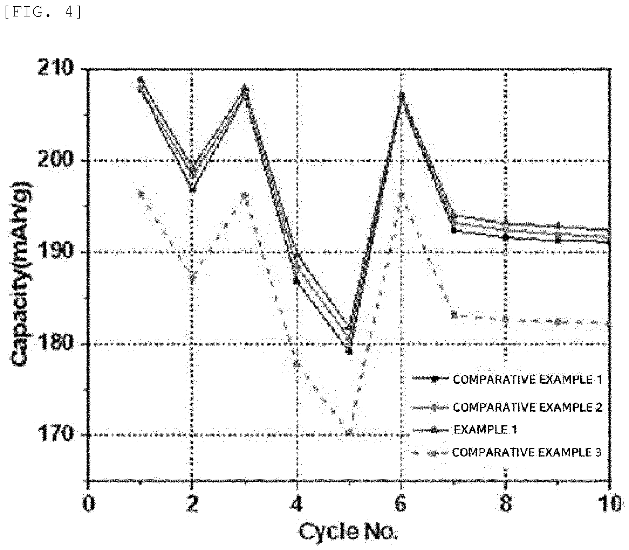

The electrochemical performance of the recycled or fresh positive electrode active materials obtained in Examples 1 to 7 and Comparative Examples 1 to 4 was measured through CHC cell evaluation described below, and the results are shown in Table 1 and FIG. 4 below.

**[0170]** * CHC cell evaluation: 97.5 % by weight of a recycled or fresh positive electrode active material, 1.15 % by weight of carbon black as a conductive material, and 1.35 % by weight of PVdF as a binder were prepared and mixed in an NMP to obtain slurry, and aluminum foil was coated with the slurry to manufacture a positive electrode. Then, a cell (Coin Half Cell, CHC) was manufactured. The electrochemical performance (charge capacity, discharge capacity, and efficiency) was evaluated under the conditions of 3 to 4.25 V cut; initial formation charge/discharge 0.1C/0.1C; using an electrolyte solution having a weight ratio of ethylene carbonate (EC): dimethyl carbonate (DMC): ethyl methyl carbonate (EMC) = 3:4:3; and including other additives.

[Table 1]

| Classification | CH (mAh/g) | DCH (mAh/g) | Eff (%) |
|---|---|---|---|
| Example 1 | 227.61 | 208.81 | 91.74 |
| Example 2 | 227.16 | 208.60 | 91.83 |
| Example 3 | 226.14 | 209.04 | 92.44 |
| Example 4 | 226.86 | 208.66 | 91.98 |
| Example 5 | 225.80 | 208.21 | 92.21 |
| Example 6 | 226.20 | 205.85 | 91.00 |
| Example 7 | 226.05 | 205.76 | 91.02 |
| Comparative Example 1 | 228.79 | 207.79 | 90.82 |
| Comparative Example 2 | 228.67 | 207.83 | 90.89 |
| Comparative Example 3 | 223.39 | 196.33 | 87.88 |
| Comparative Example 4 | 218.40 | 200.09 | 91.61 |

As shown in Table 1, in the case of the recycled positive electrode active materials (Examples 1 to 7) of the present invention, compared to the fresh positive electrode active material (Comparative Example 1) and the recycled positive electrode active materials (Comparative Examples 2 to 4) not including LiF, initial charge capacity (CH) and initial discharge capacity (DCH) and efficiency were excellent. In particular, among the examples according to the present invention, in the case of Examples 1 to 5 in which the annealed positive electrode active material and distilled water were mixed in a weight ratio of 1:1 to 1:3 in the washing step, compared to Examples 6 and 7 in which distilled water was used in an amount more than 5 times that of the annealed positive electrode active material, the initial discharge capacity (DCH) and efficiency of the recycled positive electrode active material were superior.

In addition, FIG. 4 below is a graph showing change in capacity depending on the number of cycles (Cycle No.) as a result of evaluating a coin cell for each of the recycled or fresh positive electrode active materials prepared in Example 1 and Comparative Examples 1 to 3. Referring to FIG. 4, at cycles of 4(1C) and 5(2C), the capacity of Example 1 is superior to that of Comparative Examples 1 and 2. This result indicates that the recycled positive electrode active materials (Examples 1 to 7) according to the present invention have excellent output characteristics compared to the fresh positive electrode active material (Comparative Example 1) and the recycled positive electrode active materials (Comparative Examples 2 and 3) not including LiF.

[Test Example III: Powder resistance]

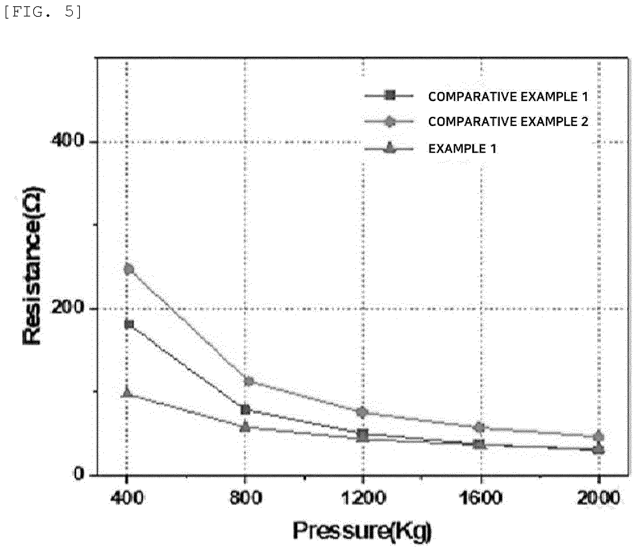

The recycled or fresh positive electrode active materials obtained in Example 1 and Comparative Examples 1 and 2 were put into the holder of a powder resistance characteristic tester (HPRM-A2, Hantech Co., Ltd.). Then, resistance was measured every 400 kg, and powder resistance was measured at 5 points up to 2,000 kg. The obtained results are shown in FIG. 5 below.

FIG. 5 below is a graph showing change in powder resistance depending on pressure for each of the recycled or fresh positive electrode active material powders prepared in Example 1 and Comparative Examples 1 and 2. As shown in FIG. 5, in the case of the recycled positive electrode active material prepared in Example 1, compared to the fresh positive electrode active material of Comparative Example 1 as a standard, the powder resistance of Example 1 was very low before 1,600 kg. After 1,600 kg, the powder resistance of Example 1 was the same as that of Comparative Example 1. However, the recycled positive electrode active material prepared in Comparative Example 2 and containing no LiF due to the initial washing process exhibited very low powder resistance compared to the recycled positive electrode active material of Example 1. In addition, the recycled positive electrode active material of Comparative Example 2 exhibited higher powder resistance than the fresh positive electrode active material of Comparative Example 1 in the entire range of pressure.

[Test Example IV: Mono cell evaluation]

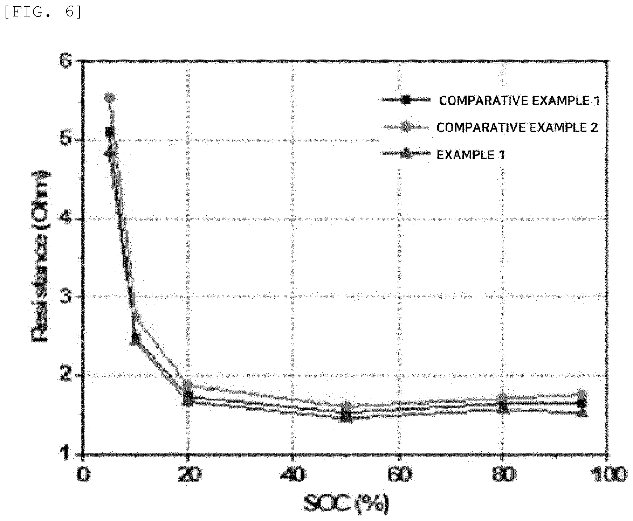

The HPPC resistance characteristics of the recycled or fresh positive electrode active materials obtained in Example 1 and Comparative Examples 1 and 2 were evaluated through mono cell evaluation described below, and the results are shown in Table 2 and FIG. 6 below.

* Mono cell evaluation: As in the coin cell condition, positive electrode active material slurry was applied to aluminum foil having a thickness of 20 $\mu$m. Then, the aluminum foil was dried at 130 °C for 1 hour, and then blanked to a size of 30 mm $\times$ 42 mm to manufacture a positive electrode.

In addition, 95.6 % by weight of a mixture containing natural graphite and artificial graphite in a weight ratio of 5:5, 3.3 % by weight of a conductive material, and 1.1 % by weight of a binder were mixed to prepare negative electrode active material slurry. Then, the slurry was applied to copper foil having a thickness of 10 $\mu$m. The copper foil was rolled and dried, and then blanked to a size of 31 mm $\times$ 43 mm to manufacture a negative electrode.

After bonding the manufactured positive and negative electrodes to a separator, an electrolyte solution having a weight ratio of EC:EMC=3:7 was injected thereto to manufacture a polymer cell-type test mono cell.

Resistance was recorded by performing Pulse Discharge (DC-IR measurement) for each SOC section using the hybrid pulse power characterization (HPPC) method for the manufactured mono cell. As shown in Equation 1 below, the resistance was calculated by dividing a voltage change appearing during discharge by discharge current.

$$[\text{Equation 1}]$$

$$R=V/I$$

In Equation 1, R is resistance, V is voltage change during discharge, and I is discharge current.

[Table 2]

| (Unit: Ohm) | SOC 50 (%) | SOC 5 (%) |
|---|---|---|
| Example 1 | 1.454 (-4.9 %) | 4.85 (-5.0 %) |
| Comparative Example 1 | 1.53 (0 %) | 5.106 (0 %) |
| Comparative Example 2 | 1.604 (+4.9 %) | 5.538 (+8.5 %) |

As shown in Table 2, in the case of the recycled positive electrode active material (Example 1) according to the present invention, compared to the fresh positive electrode active material of Comparative Example 1 as a standard, the resistances at SOC 50 and SOC 5 were greatly reduced to -4.9 % and -5.0 %, respectively. That is, power characteristics were greatly improved. However, in the case of the recycled positive electrode active material prepared in Comparative Example 2 and containing no crystalline LiF according to the present invention due to the initial washing process, compared to the recycled positive electrode active material of Example 1, the resistance was significantly low. In addition, in the case of the recycled positive electrode active material prepared in Comparative Example 2, compared to the fresh positive electrode active material of Comparative Example 1, the resistances were greatly increased to +4.9 % and +8.5 %, respectively. That is, output characteristics were greatly reduced.

In addition, FIG. 6 below is a graph showing change in resistance depending on SOC (%) as a result of evaluating a mono cell for each of the recycled or fresh positive electrode active materials prepared in Example 1 and Comparative Examples 1 and 2. Referring to FIG. 6, in the case of the recycled positive electrode active materials (Example 1, etc.) according to the present invention, compared to the fresh positive electrode active material (Comparative Example 1) and the recycled positive electrode active material (Comparative Example 2) containing no crystalline LiF according to the present invention, the resistance was low in the entire range from SOC 5 to SOC 100, indicating that output characteristics were excellent.

[Additional Examples]

Additional Example 1

After blanking a positive electrode plate, discarded positive electrode scraps (current collector: aluminum foil, positive electrode active material: NCM-based lithium composite transition metal oxide (NCM651520, nickel content: 65 mol%)) were crushed, and the crushed scraps were heat-treated at 550 °C for 30 minutes in air to remove a binder and a conductive material and separate a current collector and a positive electrode active material. Through these processes, the positive electrode active material was recovered. At this time, temperature was increased to the heat treatment temperature at a temperature-increasing rate of 5 °C/min, and air was supplied at a rate of 3 L/min.

Based on 100 mol% in total of lithium in the positive electrode active material as a raw material, LiOH as a lithium precursor was added to the recovered positive electrode active material in an amount corresponding to 9 mol%, and annealing was performed at 750 °C for 5 hours in air. At this time, air was supplied at a rate of 3 L/min.

The annealed positive electrode active material and distilled water were mixed in a weight ratio of 1:2 and stirred at 300 rpm for 5 minutes, and then vacuum filtration was performed to obtain solids. The solids were subjected to vacuum drying at 100 to 130 °C for 12 hours to obtain a washed positive electrode active material.

The washed positive electrode active material was coated with boric acid and heated at 300 °C for 5 hours to obtain a recycled positive electrode active material as a final product. At this time, boric acid was added in an amount corresponding to 1,000 ppm of boron lost in the previous process, the heating was performed at a temperature-increasing rate of 2 °C/min until the heat treatment temperature was reached, and air was supplied at a rate of 3 L/min.

In the present invention, the molar ratio between lithium and other metals in the positive electrode active material was measured using an IC analyzer. In this case, general ICP analyzers, which are widely used in laboratories, may be used, but there is no deviation depending on the measurement devices or methods.

Additional Example 2

A recycled positive electrode active material was prepared in the same manner as in Additional Example 1 except that, in the washing step of Additional Example 1, the annealed positive electrode active material and distilled water were mixed in a weight ratio of 1:1.

Additional Example 3

After blanking a positive electrode plate, discarded positive electrode scraps (current collector: aluminum foil, positive electrode active material: NCM-based lithium composite transition metal oxide (NCM622, nickel content: 60 mol%)) were crushed, and the crushed scraps were heat-treated at 550 °C for 30 minutes in air to remove a binder and a conductive material and separate a current collector and a positive electrode active material. Through these processes, the positive electrode active material was recovered. At this time, temperature was increased to the heat treatment temperature at a temperature-increasing rate of 5 °C/min, and air was supplied at a rate of 3 L/min.

Based on 100 mol% in total of lithium in the positive electrode active material as a raw material, LiOH as a lithium precursor was added to the recovered positive electrode active material in an amount corresponding to 9 mol%, and annealing was performed at 750 °C for 5 hours in air. At this time, air was supplied at a rate of 3 L/min.

The annealed positive electrode active material and distilled water were mixed in a weight ratio of 1:2 and stirred at 300 rpm for 5 minutes, and then vacuum filtration was performed to obtain solids. The solids were subjected to vacuum drying at 100 to 130 °C for 12 hours to obtain a washed positive electrode active material.

The washed positive electrode active material was coated with boric acid and heated at 300 °C for 5 hours to obtain a recycled positive electrode active material as a final product. At this time, boric acid was added in an amount corresponding to 1,000 ppm of boron lost in the previous process, the heating was performed at a temperature-increasing rate of 2 °C/min until the heat treatment temperature was reached, and air was supplied at a rate of 3 L/min.

Additional Comparative Example 1

Instead of the recycled active material, a fresh NCM-based lithium composite transition metal oxide (NCM651520) was used.

Additional Comparative Example 2

A recycled positive electrode active material was prepared in the same manner as in Additional Example 1 except that the step of washing the annealed positive electrode active material was omitted.

Additional Comparative Example 3

A recycled positive electrode active material was prepared in the same manner as in Additional Example 1 except that, after heat treatment, the recovered positive electrode active material and distilled water were mixed in a weight ratio of 1:40, washing was performed, and then annealing was performed.

Additional Comparative Example 4

Instead of the recycled active material, a fresh NCM-based lithium composite transition metal oxide (NCM622; nickel content: 60 mol%) was used.

Additional Comparative Example 5

A recycled positive electrode active material was prepared in the same manner as in Additional Example 3 except that, after heat treatment, the recovered positive electrode active material and distilled water were mixed in a weight ratio of 1:40, washing was performed, and then annealing was performed.

[Test Example I: Content of residual lithium]

The content of residual lithium in the recycled or fresh positive electrode active materials obtained in Additional Examples 1 to 3 and Additional Comparative Examples 1 to 5 was measured according to the following method, and the results are shown in Table 3 below.

* Content of residual lithium: The content of residual lithium was measured using a pH titrator (T5, Mettler Toledo Co.). Specifically, 5 g of the positive electrode active material was dispersed in 100 ml of distilled water and mixed at 300 rpm for 5 minutes, and then filtering was performed to filter out an active material and obtain a filtrate. Change in pH values was measured while titrating the filtrate with a 0.1 M HCl solution. Based on the measurement result, a pH titration curve was obtained. Using the pH titration curve, the amounts of residual LiOH and $Li_2CO_3$ in the positive electrode active material were calculated.

[Table 3]

| Classification | Residual Li | | |
|---|---|---|---|
| | $Li_2CO_3$ (wt%) | LiOH (wt%) | Sum (wt%) |
| Additional Example 1 | 0.095 | 0.370 | 0.465 |
| Additional Example 2 | 0.215 | 0.335 | 0.550 |
| Additional Example 3 | 0.045 | 0.310 | 0.355 |
| Additional Comparative Example 1 | 0.277 | 0.142 | 0.419 |
| Additional Comparative Example 2 | 0.605 | 0.565 | 1.170 |
| Additional Comparative Example 3 | 0.471 | 0.227 | 0.698 |
| Additional Comparative Example 4 | 0.385 | 0.270 | 0.655 |
| Additional Comparative Example 5 | 0.164 | 0.187 | 0.351 |

As shown in Table 3, in the case of Additional Examples 1 and 2 in which the annealed positive electrode active material (NCM-based lithium composite transition metal oxide, NCM651520) and distilled water were mixed in a weight ratio of 1:2 or 1:1, and washing was performed, compared to the fresh positive electrode active material (Additional Comparative Example 1), the recycled positive electrode active material (Additional Comparative Example 2) in which washing was omitted after annealing, and the recycled positive electrode active material (Additional Comparative Example 3) in which washing was performed after heat treatment, the amount of residual Li was significantly reduced using a small amount of washing liquid. In addition, in the case of Additional Example 3 in which the annealed positive electrode active material (NCM-based lithium composite transition metal oxide, NCM622) and distilled water were mixed in a weight ratio of 1:2, and washing was performed, compared to the fresh positive electrode active material (Additional Comparative Example 4), the amount of residual Li was significantly reduced using a small amount of washing liquid. In addition, compared to the recycled positive electrode active material (Additional Comparative Example 5) in which washing was performed after heat treatment, using a small amount of washing liquid, the amount of residual Li was the same as in Additional Comparative Example 5 or was reduced than Additional Comparative Example 5.

[Test Example II: CHC cell evaluation]

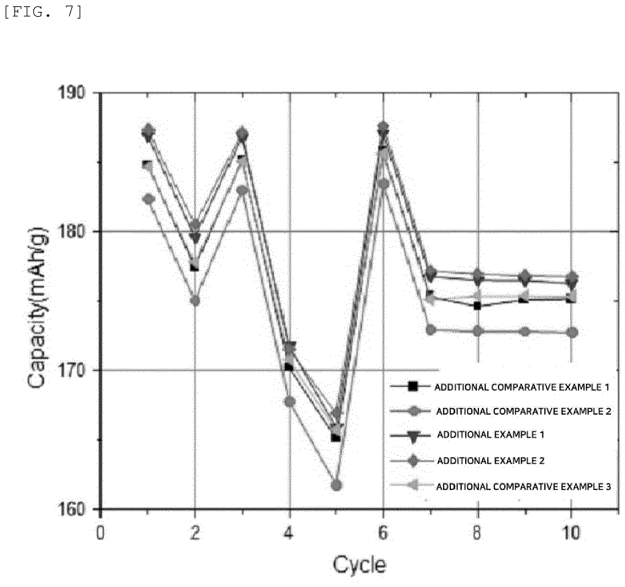

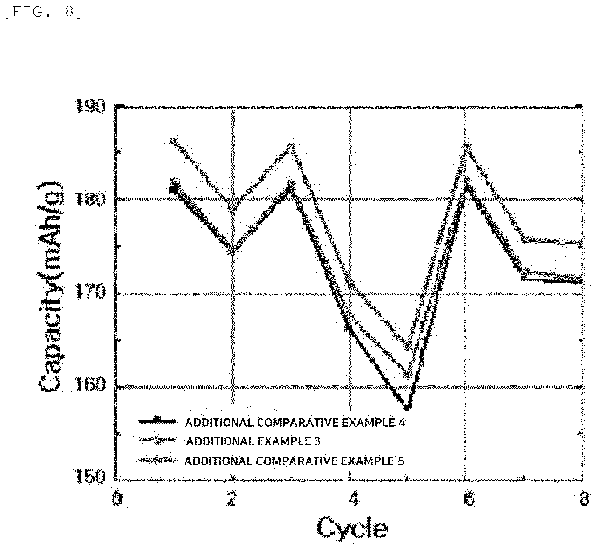

The electrochemical performance of the recycled or fresh positive electrode active materials obtained in Additional Examples 1 to 3 and Additional Comparative Examples 1 to 5 was measured through CHC cell evaluation described below, and the results are shown in FIG. 7 and 8 below.

\* CHC cell evaluation: 96 % by weight of a recycled or fresh positive electrode active material, 2 % by weight of carbon black as a conductive material, and 2 % by weight of PVdF as a binder were prepared and mixed in an NMP to obtain slurry, and aluminum foil was coated with the slurry to manufacture a positive electrode. Then, a cell (Coin Half Cell, CHC) was manufactured. Then, the electrochemical performance (charge capacity, discharge capacity, and efficiency) was evaluated under the conditions of 3 to 4.25 V cut; initial formation charge/discharge 0.1C/0.1C; using an electrolyte solution having a weight ratio of ethylene carbonate (EC): dimethyl carbonate (DMC) = 3:7; and including other additives.

FIG. 7 below is a graph showing change in capacity depending on the number of cycles (Cycle No.) as a result of evaluating a coin cell for each of the recycled or fresh positive electrode active materials prepared in Additional Examples 1 and 2 and Additional Comparative Examples 1 to 3. Referring to FIG. 7, in the case of the recycled positive electrode active materials (Additional Examples 1 and 2) according to the present invention, compared to the fresh positive electrode active material (Additional Comparative Example 1), the recycled positive electrode active material (Additional Comparative Example 2) in which washing was omitted after annealing, and the recycled positive electrode active material (Additional Comparative Example 3) in which washing was performed after heat treatment, the amount of washing liquid was greatly reduced, and the amount of residual lithium was significantly reduced, indicating that the recycled positive electrode active materials (Additional Examples 1 and 2) have excellent output characteristics.

In addition, FIG. 8 below is a graph showing change in capacity depending on the number of cycles (Cycle No.) as a result of evaluating a coin cell for each of the recycled or fresh positive electrode active materials prepared in Additional Example 3 and Additional Comparative Examples 4 and 5. Referring to FIG. 8, in the case of the recycled positive electrode active material (Additional Example 3) according to the present invention, compared to the fresh positive electrode active material (Additional Comparative Example 4) and the recycled positive electrode active material (Additional Comparative Example 5) in which, after heat treatment, the recovered positive electrode active material was washed with a washing liquid equal to 40 times the amount thereof, the amount of washing liquid was greatly reduced, and the amount of residual lithium was significantly reduced, indicating that the recycled positive electrode active material (Additional Example 3) has excellent output characteristics.

**Claims**

1. A recycled positive electrode active material, comprising one or more selected from the group consisting of a lithium nickel oxide (LNO)-based positive electrode active material, a nickel-cobalt-manganese (NCM)-based positive electrode active material, a nickel-cobalt-aluminum (NCA)-based positive electrode active material, and a nickel-cobalt-manganese-aluminum (NCMA)-based positive electrode active material, comprising 60 mol% or more of Ni, and containing crystalline LiF or 0.24 % by weight or less of residual $Li_2CO_3$.

2. The recycled positive electrode active material according to claim 1, wherein the crystalline LiF exhibits a peak at 38 to 40° in an XRD spectrum based on 2theta.

3. The recycled positive electrode active material according to claim 1, wherein the crystalline LiF is comprised in an amount of 0.1 to 10 % by weight on a surface of the recycled positive electrode active material based on an XPS surface analysis spectrum.

4. The recycled positive electrode active material according to claim 1, wherein a surface of the recycled positive electrode active material is coated with a coating agent containing a metal or carbon.

5. The recycled positive electrode active material according to claim 4, wherein the metal is boron (B), tungsten (W), or a mixture thereof.

6. The recycled positive electrode active material according to claim 1, wherein the recycled positive electrode active material has a powder resistance of 100 $\Omega$ or less under a pressure of 800 kg, or a powder resistance of 40 $\Omega$ or less under a pressure of 2,000 kg.

7. A method of recycling a positive electrode active material, comprising:

heat-treating a waste positive electrode having a positive electrode active material layer comprising one or more selected from the group consisting of a lithium nickel oxide (LNO)-based positive electrode active material, a nickel-cobalt-manganese (NCM)-based positive electrode active material, a nickel-cobalt-aluminum (NCA)-based positive electrode active material, and a nickel-cobalt-manganese-aluminum (NCMA)-based positive electrode active material formed on a current collector to thermally decompose a binder and a conductive material in the active material layer to separate the current collector from the active material layer and recover a positive electrode active material from the active material layer;
adding a lithium precursor to the recovered positive electrode active material and performing annealing; and
washing the annealed positive electrode active material.

8. The method according to claim 7, wherein, in the washing, the annealed positive electrode active material and a washing liquid are mixed in a weight ratio of 1:0.5 to 1:5.5.

9. The method according to claim 7, wherein the thermal decomposition is performed at 300 to 650 °C.

10. The method according to claim 7, wherein, in the annealing, the recovered positive electrode active material contains crystallinity LiF.

11. The method according to claim 7, wherein the lithium precursor comprises one or more of LiOH, $Li_2CO_3$, $LiNO_3$, and $Li_2O$.

12. The method according to claim 7, wherein, based on 100 mol% in total of lithium in a positive electrode active material used as a raw material when forming the positive electrode active material layer, the lithium precursor is added in an amount corresponding to 1 mol% to 40 mol%.

13. The method according to claim 7, wherein the annealing is performed at 400 to 1,000 °C under an oxygen atmosphere or in air.

14. The method according to claim 7, wherein the washing comprises performing filtration after mixing the annealed positive electrode active material and the washing liquid; and drying a solid positive electrode active material obtained after the filtration.

15. The method according to claim 8 or 14, wherein the washing liquid is water or a basic aqueous lithium compound solution.

16. The method according to claim 7, comprising obtaining a reusable positive electrode active material by coating a surface of the washed positive electrode active material.

17. The method according to claim 16, wherein, in the surface coating, the surface is coated with one or more of a metal, an organic metal, and a carbon component in a solid or liquid manner, and then is heat-treated at 100 to 1,200 °C.

18. A recycled positive electrode active material, comprising one or more selected from the group consisting of a lithium nickel oxide (LNO)-based positive electrode active material, a nickel-cobalt-manganese (NCM)-based positive electrode active material, a nickel-cobalt-aluminum (NCA)-based positive electrode active material, and a nickel-cobalt-

manganese-aluminum (NCMA)-based positive electrode active material and containing 0.24 % by weight or less of residual $Li_2CO_3$.

19. A secondary battery, comprising the recycled positive electrode active material according to any one of claims 1 to 6 or claim 18.

[FIG. 1]

COMPARATIVE EXAMPLE 1

EXAMPLE 1

COMPARATIVE EXAMPLE 2

[FIG. 2]

[FIG. 3]

[FIG. 4]

[FIG. 5]

[FIG. 6]

[FIG. 7]

[FIG. 8]

[FIG. 9]

S10 — WASTE POSITIVE ELECTRODE

↓

S20 — CRUSHING

↓

S30 — HEAT TREATMENT

↓

S40 — ANNEALING

↓

S50 — WASHING

↓

S60 — SURFACE COATING

↓

RECYCLED POSITIVE
ELECTRODE ACTIVE MATERIAL

## INTERNATIONAL SEARCH REPORT

| | International application No. |
|---|---|
| | **PCT/KR2023/008799** |

### A. CLASSIFICATION OF SUBJECT MATTER

**H01M 4/525**(2010.01)i; **H01M 4/36**(2006.01)i; **H01M 4/505**(2010.01)i; **H01M 10/54**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01); H01M 10/54(2006.01); H01M 4/131(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재생(recycle), 재사용(reuse), 세척(wash), 어닐링(annealing), LiF(lithium fluorin), 잔류 리튬(residual lithium), 양극(cathode), 이차전지(secondary battery)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0042659 A (LG ENERGY SOLUTION, LTD.) 05 April 2022 (2022-04-05)<br>See paragraphs [0028]-[0032], [0042]-[0086] and [0159], and claims 1-16. | 1-19 |
| Y | KR 10-2000-0019850 A (P & M CO., LTD.) 15 April 2000 (2000-04-15)<br>See paragraphs [0025]-[0027] and [0033], and claim 7. | 1-19 |
| A | KR 10-2019-0078498 A (POSCO et al.) 04 July 2019 (2019-07-04)<br>See paragraph [0025], and claims 1, 2, 14 and 15. | 1-19 |
| A | KR 10-2022-0005157 A (LG ENERGY SOLUTION, LTD.) 13 January 2022 (2022-01-13)<br>See claim 11. | 1-19 |
| A | KR 10-2021-0150687 A (LG ENERGY SOLUTION, LTD.) 13 December 2021 (2021-12-13)<br>See claims 1-17. | 1-19 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 September 2023** | **26 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2023/008799**

| Patent document cited in search report | | | Publication date (day/month/year) | Patent family member(s) | | | Publication date (day/month/year) |
|---|---|---|---|---|---|---|---|
| KR | 10-2022-0042659 | A | 05 April 2022 | None | | | |
| KR | 10-2000-0019850 | A | 15 April 2000 | None | | | |
| KR | 10-2019-0078498 | A | 04 July 2019 | CN | 111771303 | A | 13 October 2020 |
| | | | | EP | 3734720 | A1 | 04 November 2020 |
| | | | | JP | 2021-509220 | A | 18 March 2021 |
| | | | | JP | 7008828 | B2 | 25 January 2022 |
| | | | | KR | 10-2177049 | B1 | 10 November 2020 |
| | | | | US | 2023-0140577 | A1 | 04 May 2023 |
| | | | | WO | 2019-132332 | A1 | 04 July 2019 |
| KR | 10-2022-0005157 | A | 13 January 2022 | CN | 115104213 | A | 23 September 2022 |
| | | | | EP | 4145590 | A1 | 08 March 2023 |
| | | | | JP | 2023-511183 | A | 16 March 2023 |
| | | | | US | 2023-0062492 | A1 | 02 March 2023 |
| | | | | WO | 2022-010161 | A1 | 13 January 2022 |
| KR | 10-2021-0150687 | A | 13 December 2021 | CN | 115136386 | A | 30 September 2022 |
| | | | | EP | 4095982 | A1 | 30 November 2022 |
| | | | | JP | 2023-510361 | A | 13 March 2023 |
| | | | | US | 2023-0051670 | A1 | 16 February 2023 |
| | | | | WO | 2021-246606 | A1 | 09 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230080987
- KR 1020220082982
- KR 1020220082983